# EUROPÄISCHE PATENTSCHRIFT

(11) **EP 2 013 597 B1**
(45) Veröffentlichungstag und Bekanntmachung des Hinweises auf die Patenterteilung: **21.04.2010**
(21) Anmeldenummer: 07720109.3
(22) Anmeldetag: 02.05.2007
(51) Int. Cl.: G01L 1/16, G01L 9/00

(54) **PIEZOELEKTRISCHES MESSELEMENT MIT TRANSVERSALEFFEKT UND SENSOR, UMFASSEND EIN SOLCHES MESSELEMENT**
PIEZOELECTRIC MEASURING ELEMENT WITH TRANSVERSE EFFECT AND SENSOR COMPRISING SUCH A MEASURING ELEMENT
ÉLÉMENT DE MESURE PIÉZOÉLECTRIQUE À EFFET TRANSVERSAL, ET CAPTEUR ÉQUIPÉ DE CET ÉLÉMENT DE MESURE

(30) Priorität: 04.05.2006 CH 729062006; 07.06.2006 CH 924062006
(43) Veröffentlichungstag der Anmeldung: 14.01.2009
(73) Patentinhaber: Kistler Holding AG, 8408 Winterthur (CH)
(72) Erfinder: STAIGER, Ulrich, 8260 Stein am Rhein (CH); ENGELER, Paul, 8500 Frauenfeld (CH); CAVALLONI, Claudio, 8105 Regensdorf (CH)
(86) Internationale Anmeldenummer: PCT/CH2007/000212
(87) Internationale Veröffentlichungsnummer: WO 2007/128149

(56) Entgegenhaltungen:
- WO-A-2005/026678
- CH-A- 454 490
- CH-A5- 670 310
- DE-A1- 3 727 221

## Beschreibung

### Technisches Gebiet

Die Erfindung betrifft ein piezoelektrisches Messelement gemäss Oberbegriff des ersten Patentanspruchs sowie einen Sensor umfassend ein solches Messelement.

### Stand der Technik

Piezoelektrische Messelemente werden in einer Vielzahl von Anwendungen eingesetzt, beispielsweise in Druck- Kraft- Dehnungs- oder in Beschleunigungssensoren. Bei einer Messung wird ein Körper aus piezoelektrischem Material einer mechanischen Belastung ausgesetzt, wodurch elektrische Ladung an gewissen Flächen des Körper entsteht. Diese Ladung wird gesammelt und mittels Elektroden zu einem Kabelanschluss geführt. Das Kabel leitet die Ladung schlussendlich zu einem Verstärker, der auch ein Vorverstärker sein kann.

Es gibt prinzipiell zwei verschiedene Möglichkeiten, die Ladung zum Verstärker zu führen, nämlich entweder mit einem Koaxialkabel oder mit einem Zweileiterkabel. Bei der Verwendung des Koaxialkabels werden die Messdaten von der ersten Elektrode auf den Innenleiter übertragen, während die andere Elektrode.auf dem Potential der Masse sein kann und mit der Abschirmung verbunden ist, welche die Messleitung von äusseren Störfeldern schützt. Zusätzlich kann, durch Verwendung eines Triaxialkabels, eine zweite Abschirmung erstellt werden. Bei der Verwendung des Zweileiterkabels hingegen werden die beiden Elektroden an zwei Adern eines Kabels geschlossen, das als Ganzes wiederum einfach oder zweifach abgeschirmt werden kann. Am Verstärker wird die Ladungsdifferenz der beiden Adern ausgewertet. Da die Adern denselben Störfeldern ausgesetzt sind, bewirkt ein Störfeld keine resultierende Änderung der Ladungsdifferenz.

Anwendungen mit der Zweileitertechnik sind beispielsweise Messelemente mit einer oder mehreren piezoelektrischen Platten mit Longitudinaleffekt. Longitudinaleffekt bedeutet, dass an die Flächen die Ladung entsteht, an denen die Kraft eingeleitet wird. Diese Flächen werden meist metallisiert, um die Ladung zu sammeln. Die Metallisierungen derselben Polarisation werden jeweils mit einer Elektrode verbunden und diese mit einem der beiden Leitern versehen. Da die metallisierten Flächen unter Last liegen, ist ein guter Kontakt benachbarter Flächen stets gewährleistet.

Anwendungen mit der Koaxialtechnik umfassen ebenfalls Messelemente mit einer oder mehreren piezoelektrischen Platten mit Longitudinaleffekt, deren Elektroden entsprechend mit dem Innenleiter und der Abschirmung verbunden werden. Andererseits ist aber auch die Anwendung von Stäben mit Transversaleffekt aus piezoelektrischem Material mit der Koaxialtechnik bekannt. Transversaleffekt bedeutet, dass die Flächen, an denen unter Last Ladung entsteht, senkrecht zu den Lasteinleitungsflächen sind. In der EP 1 283 552 ist eine solche Anwendung mit einem, in der WO 2005/026678 eine Anwendung mit mehreren Stabkristallen mit Transversaleffekt angegeben. Die Elektroden, welche die Ladungen sammeln, sind in diesen Fällen mit Metallisierungen auf den krafteinleitenden Flächen, welche einen guten Kontakt zum Abnehmen der Ladung gewährleisten, elektrisch verbunden.

Der Vorteil von piezoelektrischen Stäben mit Transversaleffekt gegenüber solchen Platten mit Longitudinaleffekt liegt in der Empfindlichkeit und im Preis - Leistungsverhältnis. Um dieselbe Empfindlichkeit mit Platten zu erreichen, welche mit einem dünnen Stab erreicht werden kann, muss ein Plattenstapel mit vielen Platten verwendet werden, der viel teurer ist als der Stab und auch recht hoch. Um die Festigkeit und die Empfindlichkeit von Messelementen mit Stäben weiter zu erhöhen, können auch mehrere oder dünnere Stäbe verwendet werden, wie in der WO 2005/026678 angegeben. Auch in dieser Anwendung sind die Elektroden mit Metallisierungen auf den beiden krafteinleitenden Flächen der piezoelektrischen Stäbe elektrisch verbunden, wodurch ein guter Kontakt erreicht wird.

Eine andere Anwendung mit mehreren Stäben ist auch aus der Fig. 2 der EP 1 283 552 bekannt. Dort sind drei Stäbe in einem Dreieck angeordnet, wobei im Innern des Dreiecks eine Feder die Ladung als erste Elektrode abnimmt, wobei die Feder gleichzeitig die äusseren wände der Kristalle an eine metallische Wand, welche die zweite Elektrode ist, drückt.

Eine weitere Anwendung eines Messelements mit einem Sensorelement aus Piezokeramik mit Transversaleffekt ist auch aus der DE 3727221 A1 bekannt. Das Sensorelement ist rohrförmig und umfasst zwei Elektroden, je eines innen und aussen am Rohr, wobei die Kontaktierung der inneren Elektrode um das Ende dieses Rohres herumgeführt wurde, sodass die Anschlussleitungen beider Elektroden auf der Aussenseite des Rohres kontaktiert werden.

Der Vorteil der Zweileitertechnik gegenüber der Koaxialtechnik besteht in der Grundisolation. Jedes Messelement mit Zweileitertechnik ist zwangsläufig grundisoliert, während ein Messelement mit Koaxialtechnik oftmals eine Elektrode auf dem Massepotential hat. Erst durch einen aufwändigen Aufbau unter Verwendung von Isolationsringen und Abschirmungen des Messelementes wird eine Grundisolierung erreicht. Diese ist beispielsweise bei Verbrennungsmotoren auf Grund der langen Signalleitungen gefordert, um Störungen durch Ausgleichsspannungen in Masseverbindungen, sogenannte Erdschlaufen, zu verhindern. Zu beachten ist, dass die Anwendung eines Sensors in einem Verbrennungsmotor eine Temperaturbeständigkeit von min-destens 300°C verlangt. Dies bedingt ausgewählte Bauteile, welche diese Temperaturen ertragen.

Es ist nicht möglich, die bekannten Stäbe mit Transversaleffekt in der Zweileitertechnik zu verwenden, da die einzelnen Elektroden konstruktionsbedingt unterschiedlichen Störfeldern ausgesetzt sind, wodurch das Messsignal verfälscht wird.

### Darstellung der Erfindung

Aufgabe der vorliegenden Erfindung ist es, ein piezoelektrisches Messelement mit mindestens einem Stab mit Transversaleffekt anzugeben, das mit der Zweileitertechnik verwendet werden kann.

Die Aufgabe wird durch die Merkmale des unabhängigen Anspruchs gelöst.

Die der Erfindung zugrunde liegende Idee besteht darin, dass die Pole, bestehend aus den Metallisierungen, Elektroden und Leitungen im Messelement mit einem oder mehreren piezoelektrischen Stäben mit Transversaleffekt derart ausgelegt sind, dass ihre elektrischen Kapazitäten zum Gehäuse identisch sind. Dies wird beispielsweise dadurch erreicht, indem die Pole vollkommen symmetrisch ausgelegt sind oder indem ein Kondensator von einem Pol zum Gehäuse vorgesehen ist, welcher dem Unterschied der Kapazitäten der beiden Pole zur Umgebung entspricht.

### Kurze Beschreibung der Zeichnungen

Im Folgenden wird die Erfindung unter Beizug der Zeichnungen näher erklärt. Es zeigen
- Fig. 1: eine schematische Darstellung im Querschnitt eines Sensors nach dem Stand der Technik;
- Fig. 2a: einen Querschnitt einer schematischen Darstellung eines erfindungsgemässen Messelements;
- Fig. 2b: eine Aufsicht auf einen piezoelektrischen Stab mit Metallisierungen wie in Fig. 2a;
- Fig. 2c: eine Aufsicht auf einen piezoelektrischen Stab aus Fig. 2a, jedoch mit anderen Metallisierungen;
- Fig. 2d: einen Querschnitt eines piezoelektrischen Stabs mit Metallisierungen wie in Fig. 2c;
- Fig. 3: ein Querschnitt einer schematischen Darstellung eines erfindungsgemässen Sensors;
- Fig. 4: eine symmetrische Anordnung von mehreren Stäben in einem Sensor;
- Fig. 5: eine Aufsicht auf ein Messelement umfassend mehrere aneinanderliegende Stäbe entgegengesetzter Ausrichtung.

### Wege zur Ausführung der Erfindung

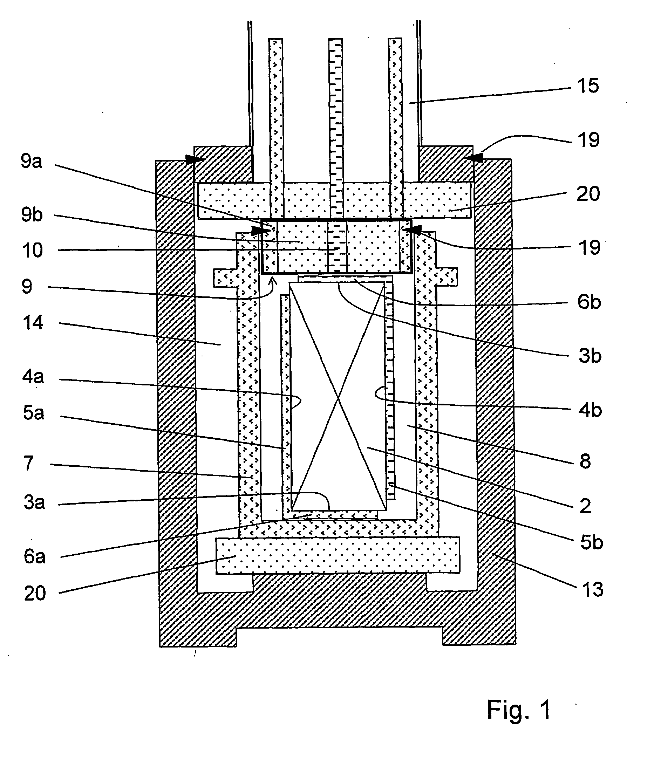

Die Fig. 1 zeigt ein grundisoliertes Messelement für Verbrennungsmotoren im Querschnitt nach dem Stand der Technik. Dieses umfasst einen Stab 2 aus piezoelektrischem Material mit Transversaleffekt. Der Stab 2 hat zwei gegenüberliegende Stirnflächen 3a, 3b als Angriffsflächen einer zu messenden Krafteinwirkung, sowie zwei weitere, sich gegenüber liegende, mit Metallisierungen 5a, 5b versehene Flächen 4a, 4b zum Sammeln von Oberflächenladungen. Jede der Metallisierung 5a, 5b ist zu einer Elektrode 6a, 6b auf einer Stirnfläche 3a, 3b weiter geführt. Der Stab 2 befindet sich im Innenraum 8 eines Gehäuses 7, welches auch eine Spannhülse sein kann zum Vorspannen des Stabes 2. Eine Abdeckung 9 verschliesst das Gehäuse 7 mit dem Stab 2. Der Stab 2 kann jede beliebige geeignete Grundfläche aufweisen, insbesondere eine rechteckige, linsenförmige, konkave oder konvexe sowie Kombinationen davon.

Die Empfindlichkeit von quaderförmigen Stäben mit Transversaleffekt ist proportional zum Verhältnis zwischen der Länge des Stabes, definiert durch den Abstand zwischen den lasteinwirkenden Flächen 3a, 3b, und dessen Dicke, definiert durch den Abstand der ladungsaufnehmenden Flächen 4a, 4b. Somit steigt die Empfindlichkeit mit der Dünne der Platten proportional an. Um die Festigkeit des Messelements zu erhöhen und die Empfindlichkeit weiter zu steigern, können mehrere Platten verwendet werden. Um dasselbe mit scheibenförmigen Platten zu erreichen, müssten sehr viele Scheiben verwendet werden, was sehr teuer kommt. Zudem würde die Länge des Messelementes sehr gross werden, was ein weiterer Nachteil darstellt.

In dieser Anordnung ist das Gehäuse 7 auf dem Potential der ersten Elektrode 6a, da diese mit einer Auflagefläche einen direkten Kontakt zum Gehäuse 7 hat. Die Abdeckung 9 umfasst einen metallischen äusseren Ring 9a, der durch den direkten Kontakt zum Gehäuse 7 ebenfalls auf dem Potential dieser Elektrode 6a ist. Mittig umfasst die Abdeckung einen vom äusseren Ring 9a isolierte Kontaktierung 10, die im elektrischen Kontakt zur zweiten Elektrode 6b steht. Dieser Kontakt wird ebenfalls durch eine gemeinsame Auflagefläche zwischen der Elektrode 6b und der Kontaktierung 10 der Abdeckung 9 erreicht. Um einen Kurzschluss zu vermeiden, muss die Abdeckung über eine Isolation 9b zwischen dem äusseren Ring 9a und der mittigen Kontaktierung 10 verfügen. Der äussere Ring 9a ist mit dem Gehäuse 7 unter Vorspannung an einer Schweissstelle 19 verschweisst.

Um das Messelement nun in einen Innenraum 14 eines Sensorgehäuses 13 einzubauen, muss dieses isoliert werden, da die Spannhülse auf dem Potential der ersten Elektrode 6a ist. Daher sind beidseitig des Messelementes Isolationsringe 20 zum Sensorgehäuse 13 angeordnet. Ein Koaxialkabel 15 führt durch einen der Isolationsringe 20 zur Abdeckung 9 und nimmt dort die elektrischen Verbindungen zu den beiden Elektroden 6a, 6b auf. Die Leitung 15 zu einem Vorverstärker oder einem Verstärker muss für ein derart aufgebautes Messelement mit einem Koaxialkabel, vorzugsweise mit einer nicht dargestellten zusätzlichen Abschirmung, geführt werden, um störende Einflüsse auf das Messsignal abzuschirmen.

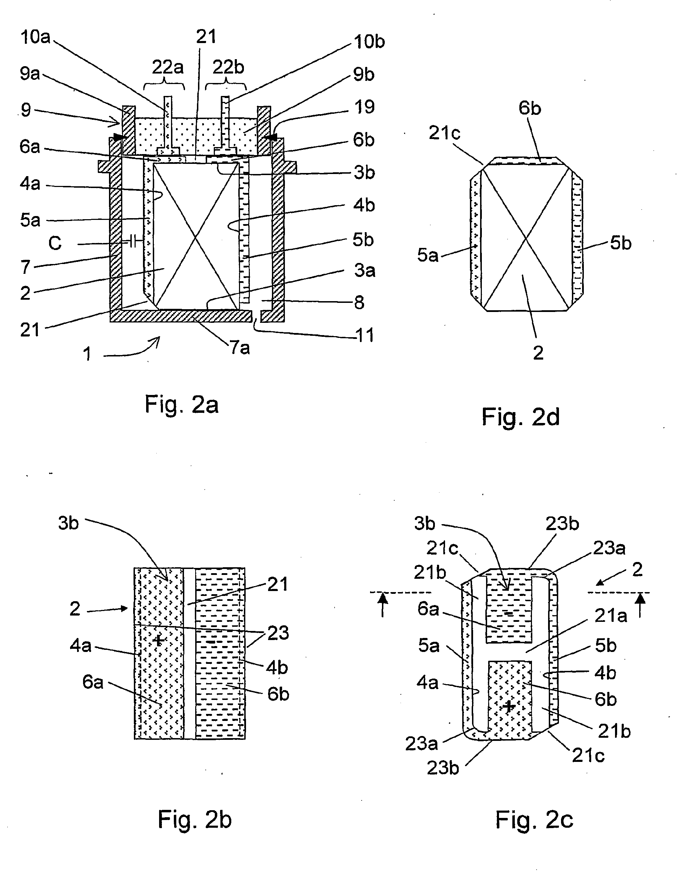

In der Fig. 2a ist ein erfindungsgemässes, grundisoliertes Messelement 1 im Querschnitt dargestellt. Analog zur Fig. 1 ist mit denselben Bezugszeichen ein Stab 2 dargestellt aus piezoelektrischem Material mit Transversaleffekt mit zwei gegenüberliegenden Stirnflächen 3a, 3b als Angriffsflächen einer zu messenden Krafteinwirkung. Dieser Stab 2 umfasst auch zwei weitere, sich gegenüber liegende, mit Metallisierungen 5a, 5b versehene Flächen 4a, 4b zum Sammeln von Oberflächenladungen. Auch in dieser Ausführung sind beide Metallisierungen 5a, 5b zu je einer Elektrode 6a, 6b auf einer Stirnfläche weiter geführt. Erfindungsgemäss sind in diesem Ausführungsbeispiel aber beide Elektroden 6a, 6b auf derselben Stirnfläche 3b angeordnet. Die andere Stirnfläche 3a ist zu beiden Elektroden 6a, 6b elektrisch isoliert. Dies wird beispielsweise dadurch erreicht, dass die Metallisierungen 5a, 5b nicht ganz bis zur Stirnfläche 3a geführt sind, wie auf der rechten Seite von Fig. 2a dargestellt. Alternativ kann dies auch durch eine Phase 21 am Rand der Stirnfläche 3a erreicht werden, die nach der Metallisierung angebracht wird, wie auf der linken Seite von Fig. 2a dargestellt. Die Stirnfläche 3b trägt nun beide Elektroden 6a und 6b. Damit diese elektrisch isoliert voneinander sind, ist die Metallisierung auf dieser Stirnfläche 3b durch eine Trennfläche 21 unterbrochen.

Alternativ können die Elektroden 6a, 6b die Ladung auch direkt an den Flächen 4a, 4b zum Sammeln der Oberflächenladungen abnehmen, ohne dass eine der Stirnflächen eine Metallisierung aufweisen muss. Dies kann beispielsweise mit einer Feder erreicht werden, wie dies im Stand der Technik beschrieben wurde.

Ein Gehäuse 7 mit einem Innenraum 8 umgibt den Stab 2 in dieser Ausführungsform. Eine Abdeckung 9 verschliesst das Gehäuse 7. Der Stab 2 ist unter Vorspannung zwischen dem Gehäuse 7 und der Abdeckung 9 angebracht. Dies wird vorzugsweise durch eine Verschweissung 19 erreicht zwischen dem Gehäuse 7 und der Abdeckung 9.

Die Abdeckung 9 weist zwei identische, zueinander isolierte, durchgeführte Pin-förmige Kontaktierungen 10a, 10b auf, welche zu den beiden Elektroden 6a, 6b elektrischen Kontakt haben.

Um die Grundisolierung zu erreichen, muss das Gehäuse 7 zu beiden Elektroden 6a, 6b elektrisch isoliert sein. Dies wird beispielsweise dadurch erreicht, dass die Abdeckung 9 einen äusseren metallischen Ring 9a mit einer inneren, beispielsweise keramischen, Isolation 9b aufweist, welche mit der zweipoligen Durchführung für die Kontaktierungen 10a und 10b versehen ist. Anstelle von Keramik kann auch Glas oder ein anderes geeignetes Material als Isolator gewählt werden.

Der Stab 2 muss im Gehäuse 7 zentriert sein. Dies kann erreicht werden, indem das Gehäuse 7 einen Boden 7a mit nicht dargestellten Führungsrillen aufweist, in welche der Stab 2 eingesetzt wird. Andererseits kann das Gehäuse 7 auch eine oder mehrere Öffnungen 11 zum Innenraum 8 aufweisen, um Zugang zum Stab 2 zu haben für die Zentrierung, die vor dem Anbringen der Vorspannung durchgeführt werden muss. Diese Öffnungen 11 können am Boden 7a des Gehäuses 7 sein und/oder sich über einen oder mehrere Bereiche einer oder mehrer Seitenflächen erstrecken. Diese Öffnungen können nach Vollendung der Zentrierung wieder gasdicht verschlossen werden.

Um die Zentrierung zu vereinfachen, kann auch ein Kristallelement als Stab 2 verwendet werden, welches einen sockelförmigen Boden aufweist, wie in der EP 1 283 552 A2 beschrieben. Die Phasen zur Trennung der Elektroden müssen entsprechend angeordnet werden.

Die Verschliessung des Gehäuses 7 ist gasdicht. Somit ist das hier beschriebene Messelement 1, wenn die Spannhülse keine Öffnungen aufweist, bereits ein fertiger Sensor, dessen Membrane durch den Boden 7a des Gehäuses 7 ausgestaltet ist. Die beiden Kontaktierungen 10a und 10b an der Abdeckung 9 müssen nun mit einem zweiadrigen Kabel zu einem Verstärker oder einem Vorverstärker geführt werden.

Erfinderisch an dieser Anordnung ist die völlig symmetrische Anordnung bezüglich zweier Pole 22a, b, welche die Metallisierungen 5a, b, die Führung der beiden Elektroden 6a, b, sowie der Kontaktierungen 10a, b für die Leitungen umfassen. Im Gegensatz zu der beschriebenen Anordnung des Standes der Technik wird in dieser Anordnung die Differenz der Potentiale der beiden Leitungen ausgewertet. Eine elektrische Störung aus der Umgebung muss daher stets auf beide Pole der Messleitung gleichmässig wirken, um keinen Einfluss auf die Differenz zu haben. Aus diesem Grunde kann auch kein Koaxialkabel zur Weiterführung des Messsignals zum Vorverstärker oder Verstärker verwendet werden, da ein äusseres Störsignal nicht beide Leitungen gleich beeinflusst. Die Kontaktierungen 10a und 10b müssen daher auch gleich sein. Sie sind als identische Pins ausgestaltet und nicht, wie im Stand der Technik, als ein Pin und ein Ring.

Um eine allfällige Asymmetrie der Kapazitäten zu kompensieren, kann ein zusätzlicher Kondensator C zwischen einem der Pole und der Umgebung, beispielsweise des Gehäuses 7 angeordnet sein, welcher den entsprechenden Wert hat, um die geforderte Symmetrie herzustellen.

Ein Messelement gemäss Fig. 2a kann bereits als einfache Form eines Sensors eingesetzt werden, beispielsweise auch als Bausatz.

Für die Führung der Elektroden sind verschiedene Möglichkeiten gegeben. In den Figuren 2b und 2c sind Aufsichten auf zwei verschiedene Ausführungsformen angegeben. Die Ausführung in Fig. 2b entspricht der Darstellung aus Fig. 2a, bei der die seitlichen Metallisierungen 5a, b auf die Stirnfläche 3b weitergeführt sind, wobei eine Phase 21 oder eine andere Unterbrechung auf der Stirnfläche 3b die Elektroden 6a, b trennt. Um eine gute Verbindung der Metallisierungen auf den Kanten zwischen der Fläche 3b zu den angrenzenden Flächen 4a, b zu gewährleisten, können vorzugsweise diese Kanten mit Rundungen 23 versehen sein. In Fig. 2a ist dies nicht dargestellt. In Fig. 2b, der Draufsicht auf den Stab 2, ist der Ort dieser Rundungen 23 angegeben. Diese Art der Metallisierung eignet sich vor allem für dickere Stäbe 2.

Bei dünneren Stäben 2 werden die Elektroden seitlich sehr klein. In diesem Fall wird die alternativen Ausführung, dargestellt in Fig. 2c und 2d, bevorzugt. Der Stab 2 wird mit Rundungen 23a an je einer Längskante der Flächen 4a, b zum Sammeln der Ladungen und Rundungen 23b an zwei Kanten der Stirnfläche 3b, welche nicht an die Flächen 4 zum Sammeln der Ladungen angrenzen, versehen. Daraufhin werden alle Flächen ausser der Stirnfläche 3a mit Metallisierungen versehen. Schliesslich werden Phasen 21a, b und c angebracht, um die Metallisierung in zwei elektrisch getrennte Elektroden 6a, b zu teilen, und zwar eine Phase 21a auf der Stirnfläche 3b mittig zwischen den Rundungen 23b, Phasen 21b seitlich auf der Stirnfläche 3b, sodass eine H Form der bisherigen Phasen entsteht, und Phasen 21c jeweils an derjenigen Längskante der Flächen 4a, b zum Sammeln der Ladungen, die nicht mit einer Rundung 23 versehen ist. Die in Fig. 2b und 2c beschriebenen Metallisierungen ergeben jeweils zwei elektrisch getrennte Elektroden, die beide auf derselben Stirnseite 3b entnommen werden können. Zudem sind die Metallisierungen und somit die Pole 22 symmetrisch. Diese neue Eigenschaft eines piezoelektrischen Stabes mit Transversaleffekt ermöglicht den Gebrauch für die Anwendung zur Zweileitertechnik.

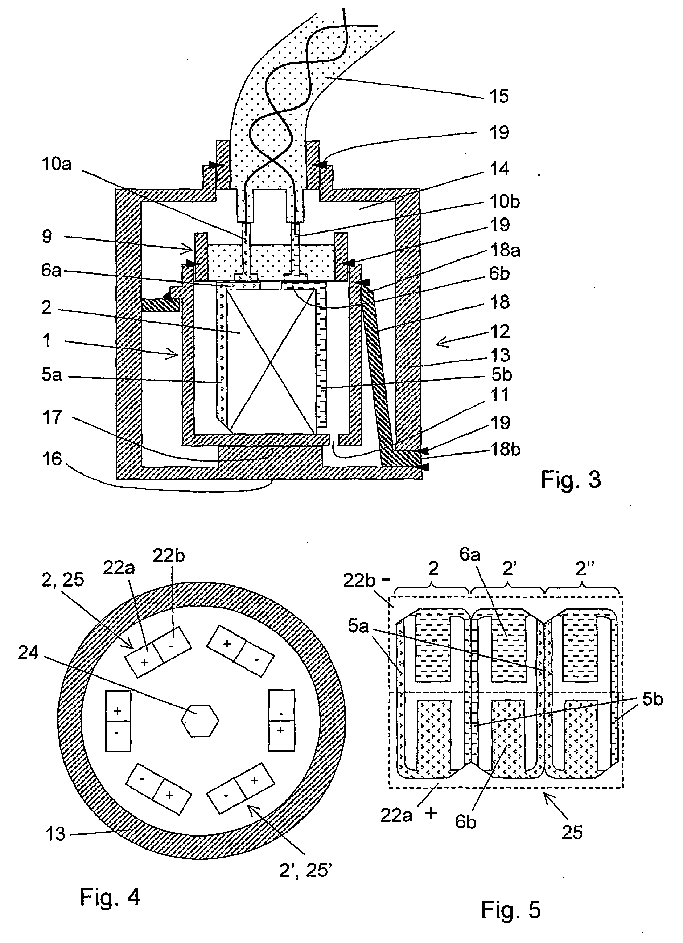

Fig. 3 beschreibt einen Sensor 12 umfassend ein Sensorgehäuse 13 mit einem Innenraum 14, ein im Innenraum 14 im Bereich einer Abdeckung 9 fixiertes Messelement 1, ein zweipoliges Kabel 15 mit elektrischen Verbindungen zu zwei Kontaktierungen 10a, 10b des Messelementes 1, sowie eine Membran 16 mit einer Kraftübertragungsfläche 17 angrenzend an das Messelement 1. Verschiedene Schweissstellen 19 halten den Sensor 12 zusammen. Das Messelement 1 entspricht erfindungsgemäss einem Messelement beschrieben in den Figuren 2.

Da das Messelement 1, im Gegensatz eines Messelementes nach Fig. 1, bereits grundisoliert ist, kann es direkt, ohne Isolationen, an das Sensorgehäuse 13 und an die Membran 16 angebracht werden. Um Übertragungen von Verspannungen am Sensorgehäuse 13 auf das Messelement 1 zu vermeiden, verursacht beispielsweise durch das Einschrauben in ein Bauteil, kann eine sogenannte Antistrainhülse 18 verwendet werden. Anstatt dass das Messelement 1 im Beeich der Abdeckung 9 mit einer direkten Verbindung zum Sensorgehäuse 13 verbunden wird, wie dies auf der linken Seite von Fig. 3 als Ausführungsbeispiel dargestellt ist, verbindet diese Antistrainhülse 18 das Messelement 1 im Bereich der Abdeckung 9 mit dem Sensorgehäuse 13 im Bereich der Membran 16, wie in der rechten Hälfte in Fig. 3 gezeigt. Dadurch üben Deformationen des Sensorgehäuse 13 keine Kräfte auf das Messelement 1 und den Stab 2 aus.

Wenn die Abdeckung 9 gasdicht am Gehäuse 7 angebracht ist, kann der Raum um den Stab 2 vakuumisiert werden, bevor er verschweisst wird. Dieser Raum kann nur den Innenraum 8 des Gehäuses 7 umfassen oder, wenn Öffnungen 11 am Gehäuse 7 angebracht sind, auch den Teil des Innenraums 14 des Sensorgehäuses 13 bis zur Antistrainhülse 18 oder einer äquivalenten Verbindung zwischen Sensorgehäuse 13 und Messelement 1.

Um die Festigkeit des Messelementes zu erhöhen und die Empfindlichkeit gleichzeitig zu steigern, können auch mehrere Stäbe 2 in einem Gehäuse 7 untergebracht werden, wie in Fig. 4 dargestellt. Dazu muss wiederum darauf geachtet werden, dass die Anordnung bezüglich der beiden Pole 22 vollständig symmetrisch ist. Das heisst, dass gleich viele positive wie negative Polarisierungsseiten der Stäbe 2 nach Aussen gerichtet sind. Allgemein ausgedrückt muss die Summe der Kapazitäten der positiven Polarisierungen gleich der Summe der Kapazitäten der negativen Polarisierungen der Stäbe 2 zur Umgebung, in diesem Beispiel zum Gehäuse 7, sein. Daher muss eine gerade Anzahl Stäbe 2 vorgesehen sein. Die Elektroden gleicher Polarität werden dann zusammengeführt und mit einer Kontaktierung 10 des zweiadrigen Kabels verbunden.

Eine andere Art der Zentrierung und der Vorspannung kann erreicht werden, wenn eine Anordnung wie in Fig. 4 dargestellt mit einer zentral angeordneten Vorrichtung 24 versehen ist, die eine Vorspannung erlaubt. In diesem Fall wird auf die Vorspannhülse 7 verzichtet zu Gunsten des zentralen Bolzens 24. Auch in diesem Fall kann eine Antistrainhülse 18 entsprechend eingesetzt werden.

Die Stäbe 2 haben vorzugsweise Metallisierungen mit elektrisch getrennten Elektroden mit kapazitiven Symmetrien und beide Elektroden auf derselben Stirnseite. Anstelle von einfachen Stäben 2 können auch Blöcke 25 von Stäben verwendet werden.

Im Folgenden wird eine Möglichkeit beschrieben, bei der mehrere Stäbe 2 zu einem Block 25 verbunden werden. Dazu werden vorzugsweise - aber nicht notwendigerweise - eine ungerade Anzahl von Stäben 2 verwendet. Diese Stäbe 2 werden, wie in Fig. 5 dargestellt, in jeweils gegengesetzter Polarisierung aneinander angeordnet und durch ihre Metallisierungen 5a, b, welche jeweils die gleiche Polarisierung aufweisen, miteinander verbunden. Metallisierungen 5a, b, welche die Ladungen sammeln, werden ausser an den sich berührenden Flächen auch an den entsprechenden Aussenflächen angebracht. Um die Ladung auf die Stirnseiten 3b zu bringen, können auch die Flächen, welche an die Stirnseiten 3b und die ladungsaufnehmenden Flächen 4a, b angrenzen, metallisiert werden. Rundungen 23 der Kanten, entsprechend denen in Fig. 2c beschrieben, sind von Vorteil. Die Phasen 21, welche angebracht werden müssen, um die Metallisierungen in zwei elektrisch getrennte Elektroden zu teilen, entsprechen denen in Fig. 2c. So können zwei Pole 22a, b angelegt werden, welche sich jeweils über die Hälfte eines Blockes 25 erstrecken, wie in Fig. 5 dargestellt.

Ein solcher Block 25 lässt sich leichter zentrieren als ein einzelner Stab 2, da die an den Metallisierungen zusammenhängenden Stäbe 2 zu einem grossen Block zusammengefasst sind. Zudem ist auch die Herstellung eines solchen Blocks kostengünstig, da dieser in einem Wafer hergestellt werden kann.

Blöcke 25 von ungeraden Anzahl Stäben 2 können einzeln oder in Gruppen verwendet werden. Blöcke von geraden Anzahl Stäben 2 können ebenfalls verwendet werden, indem mehrere solcher Blöcke so angeordnet werden, dass ihre Gesamtheit wieder symmetrisch bezüglich ihrer Pole wird. Ein Beispiel der Anordnung ist in Fig. 4 gegeben. Diese Blöcke haben dann jeweils zwei positive oder zwei negative Aussenseiten. In abwechselnder Reihenfolge angeordnet ergibt sich wieder die geforderte Symmetrie.

Der Vorteil eines solchen erfindungsgemässen Messelementes resp. Sensors besteht im einfachen und daher kostengünstigen Aufbau zum Realisieren der Grundisolierung. Zudem wird keine Temperaturbegrenzung durch eine Verwendung von hitzeempfindliche Komponenten gefordert.

### Bezugszeichenliste

- 1: Messelement
- 2: 2' Stab
- 3: 3a, 3b Stirnflächen, Krafteinleitende Flächen
- 4: 4a, 4b Flächen zum Sammeln der Oberflächenladungen
- 5: 5a, 5b Metallisierungen
- 6: 6a, 6b Elektroden
- 7: Spannhülse, Gehäuse des Messelementes
- 7a: Boden der Spannhülse /des Gehäuses
- 8: Innenraum der Spannhülse, des Gehäuses
- 9: Abdeckung mit
- 9a: äusserem Ring
- 9b: Isolation
- 10: 10a, 10b Kontaktierungen der Abdeckung
- 11: Öffnung in der Spannhülse
- 12: Sensor
- 13: Sensorgehäuse
- 14: Innenraum des Gehäuses
- 15: Kabel, Leitung, zweipolig oder Koaxial
- 16: Membran
- 17: Kraftübertragungsfläche
- 18: 18a, 18b Antistrainhülse mit zwei Enden
- 19: Schweissstelle, Verschweissung
- 20: 20a, 20b Isolationsringe
- 21: Phase, Trennfläche
- 22: 22a, 22b Pol
- 23: Rundung
- 24: Vorrichtung zur Vorspannung, zentraler Bolzen
- 25: Block
- C: Kondensator

## Patentansprüche

1. Messelement (1) mit einem oder mehreren piezoelektrischen Stäben (2) mit Transversaleffekt mit je zwei Krafteinleitungsflächen (3a, b) und je zwei ladungssammelnden Flächen (4a, b) in einem Gehäuse (7), umfassend zwei zueinander isolierte Pole (22a, b), wobei jeder Pol (22a, b) eine Kontaktierung (10a, b) geeignet für eine Verbindung zu einer zweiadrigen Messsignalleitung (15) umfasst sowie eine damit elektrisch verbundene Elektrode (6a, b) sowie eine oder mehrere damit elektrisch verbundene Metallisierungen (5a, b) auf den ladungssammelnden Flächen (4a, b) der Stäbe (2), **dadurch gekennzeichnet, dass** die elektrischen Kapazitäten, die sich zwischen jedem Pol (22a, b) und dem dazu elektrisch isolierten Gehäuse (7) durch Materialeigenschaften und geometrische Gegebenheiten definieren, identisch sind.

2. Messelement nach Anspruch 1, **dadurch gekennzeichnet, dass** die Pole (22a, b) vollkommen symmetrisch ausgelegt sind bezüglich Materialien und Geometrie.

3. Messelement nach Anspruch 1, **dadurch gekennzeichnet, dass** ein zusätzlicher Kondensator C zwischen einem der Pole (22) und dem Gehäuse (7) vorgesehen ist, welcher einen vorhandenen Unterschied der materialbedingten und geometriebedingten Kapazitäten kompensiert.

4. Messelement nach einem der vorhergehenden Ansprüche, **dadurch gekennzeichnet, dass** mindestens einer der Stäbe (2) jeweils beide Elektroden (6a, 6b) auf derselben Stirnfläche 3b, elektrisch getrennt voneinander angeordnet hat.

5. Messelement nach einem der vorhergehenden Ansprüche, **dadurch gekennzeichnet, dass** von einem oder mehreren Stäben 2 jeweils eine Stirnfläche (3a) zu beiden Elektroden (6a, 6b) elektrisch isoliert ist.

6. Messelement nach einem der vorhergehenden Ansprüche, **dadurch gekennzeichnet, dass** das Gehäuse (7) eine Abdeckung (9) mit einer zweipoligen Durchführung umfasst.

7. Messelement nach einem der vorhergehenden Ansprüche, **dadurch gekennzeichnet, dass** das Gehäuse (7) gasdicht verschlossen ist.

8. Messelement nach einem der vorhergehenden Ansprüche, **dadurch gekennzeichnet, dass** mindestens einer der Stäbe (2) vorgespannt im Gehäuse (7) ist.

9. Messelement Anspruch 8, **dadurch gekennzeichnet, dass** die Vorspannung mittels Vorspannhülse (7), mittels einer Membran oder mittels eines zentralen Vorspannvorrichtung (24) erreicht ist.

10. Messelement nach einem der vorhergehenden Ansprüche, **dadurch gekennzeichnet, dass** eine oder mehrere Gruppen von mehreren Stäben (2, 2', 2") symmetrisch im Messelement angeordnet sind.

11. Messelement nach einem der Ansprüche 1 bis 9, **dadurch gekennzeichnet, dass** zwei oder mehr Stäbe (2, 2', 2") in entgegengesetzter Ausrichtung bezüglich ihrer Polarisationen in einem Block (25) aneinander angeordnet sind und an ihren Berührungsflächen Metallisierungen aufweisen.

12. Messelement nach Anspruch 11, **dadurch gekennzeichnet, dass** eine oder mehrere Gruppen von mehreren Blöcken (25) symmetrisch im Messelement angeordnet sind.

13. Messelement nach einem der Ansprüche 10 oder 12, **dadurch gekennzeichnet, dass** eine Gruppe von Stäben (2, 2', 2") oder eine Gruppe von Blöcken (25) in einer oder mehreren Reihen angeordnet ist.

14. Messelement nach einem der Ansprüche 10 oder 12, **dadurch gekennzeichnet, dass** eine Gruppe von Stäben (2, 2', 2") oder eine Gruppe von Blöcken (25) in einem Kreis angeordnet ist.

15. Sensor (12) umfassend ein Sensorgehäuse (13) mit einem Innenraum (14), ein im Innenraum (14) fixiertes Messelement (1) nach einem der vorhergehenden Ansprüche, sowie eine Membran (16) mit einer Kraftübertragungsfläche (17) angrenzend an das Messelement (1).

16. Sensor gemäss Anspruch 15, **dadurch gekennzeichnet, dass** das Messelement (1) im Bereich der Abdeckung (9) an einem Ende (18a) einer Antistrainhülse (18) fixiert ist, wobei das andere Ende (18b) der Antistrainhülse am Sensorgehäuse (13) im Bereich der Membran (16) befestigt ist.

## Claims

1. A measuring element (1) comprising one or more piezoelectric bars (2) with transverse effect each having two force-introducing surfaces (3a, b) and two charge-collecting surfaces (4a, b) in a housing (7) comprising two poles (22a, b) insulated from each other wherein each pole (22a, b) comprises a contact site (10a, b) suitable for connection to a two conductor measurement signal line (15) as well as an electrode (6a, b) electrically connected thereto and one or more metallizations (5a, b) electrically connected thereto on the charge-collecting surfaces (4a, b) of the bars (2) **characterized in that** the electric capacitances that are defined by material properties and geometric conditions between each pole (22a, b) and the housing (7), which is electrically insulated therefrom, are identical.

2. A measuring element according to claim 1 **characterized in that** the poles (22a, b) have a completely symmetrical design witch respect to materials and geometry.

3. A measuring element according to claim 1 **characterized in that** between one of the poles (22) and the housing (7) is provided an additional capacitor C which compensates an existing difference in the capacitances caused by materials or geometry.

4. A measuring element according to any of the preceding claims **characterized in that** at least one of the bars (2) has both electrodes (6a, 6b) disposed on the same front surface 3b, electrically separated from each other.

5. A measuring element according to any of the preceding claims **characterized in that** of one or more bars 2 one front surface (3a) each is electrically insulated from both electrodes (6a, 6b).

6. A measuring element according to any of the preceding claims **characterized in that** the housing (7) comprises a cover (9) with a two conductor feedthrough.

7. A measuring element according to any of the preceding claims **characterized in that** the housing (7) is sealed in a gas-tight manner.

8. A measuring element according to any of the preceding claims **characterized in that** at least one of the bars (2) is pretensioned within the housing (7).

9. A measuring element according to claim 8, **characterized in that** the pretensioning is achieved by means of a pretensioning sleeve (7), by means of a membrane, or by means of a central pretensioning device (24).

10. A measuring element according to any of the preceding claims **characterized in that** one or more groups of several bars (2, 2', 2") are arranged symmetrically in the measuring element.

11. A measuring element according to any of the claims 1 to 9 **characterized in that** two or more bars (2, 2', 2") are arranged adjacent to each other in an opposite orientation with respect to their polarizations in a block (25) and comprise metallizations on their contact surfaces.

12. A measuring element according to claim 11 **characterized in that** one or more groups of several blocks (25) are arranged symmetrically in the measuring element.

13. A measuring element according to any of the claims 10 or 12 **characterized in that** a group of bars (2, 2', 2") or a group of blocks (25) is arranged in one or more rows.

14. A measuring element according to any of the claims 10 or 12 **characterized in that** a group of bars (2, 2', 2") or a group of blocks (25) is arranged on a circle.

15. A sensor (12) comprising a sensor housing (13) with an interior space (14), a measuring element (1) according to any of the preceding claims attached within the interior space (14) as well as a membrane (16) having a force transmission surface (17) adjacent to the measuring element (1).

16. A sensor according to claim 15 **characterized in that** the measuring element (1) is attached in the area of the cover (9) to one end (18a) of an anti-strain sleeve (18) wherein the other end (18b) of the anti-strain sleeve is affixed to the sensor housing (13) in the area of the membrane (16).

## Revendications

1. élément de mesure (1) avec un ou plusieurs barreaux piézoélectriques (2) à reflet transversal chacun ayant deux surfaces d'introduction de force (3a, b) et deux surfaces d'accumulation de charge (4a, b) dans un boîtier (7) comprenant deux pôles (22a, b) isolés l'un de l'autre dans lequel chacun pôle (22a, b) comprend un dispositif de contact (10a, b) apte à être connecté à un câble de signal de mesure à deux brins (15) ainsi qu'une électrode (6a, b) connectée électriquement à celui-ci ainsi qu'une ou plusieurs métallisations (5a, b) connectées électriquement à celui-ci sur les surfaces d'accumulation de charge (4a, b) desdits barreaux (2) **caractérisé en ce que** les capacitances électriques définies par des propriétés de matériel et des conditions géométriques entre chacun pôle (22a, b) et le boîtier (7) isolé électriquement de ceux-ci sont identiques.

2. Élément de mesure selon la revendication 1 **caractérisé en ce que** les pôles (22a, b) sont construits complètement symétriques en ce qui concerne les matériels et la géométrie.

3. Élément de mesure selon la revendication 1 **caractérisé en ce qu'**il y a prévu entre l'un de ces pôles (22) et le boîtier (7) un condensateur supplémentaire C compensant une différence existante des capacitances relative aux matériels et à la géométrie.

4. Élément de mesure selon une des revendications précédentes **caractérisé en ce qu'**au moins un de ces barreaux (2) a les deux électrodes (6a, 6b) arrangées respectivement sur la même face frontal 3b de manière électriquement isolées l'une de l'autre.

5. Élément de mesure selon une des revendications précédentes **caractérisé en ce qu'**une face frontal (3a) respectivement d'un ou plusieurs barreaux 2 est isolée électriquement de chacune des deux électrodes (6a, 6b).

6. Élément de mesure selon une des revendications précédentes **caractérisé en ce que** le boîtier (7) comprend un couvercle (9) avec un passe-câble bipolaire.

7. Élément de mesure selon une des revendications précédentes **caractérisé en ce que** le boîtier (7) est fermé de manière étanche au gaz.

8. Élément de mesure selon une des revendications précédentes **caractérisé en ce qu'**au moins l'un de ces barreaux (2) est précontraint dans le boîtier (7).

9. Élément de mesure selon la revendication 8 **caractérisé en ce que** la précontrainte est obtenue par une douille de précontrainte (7), une membrane ou par un dispositif de précontrainte central (24).

10. Élément de mesure selon une des revendications précédentes **caractérisé en ce qu'**un ou plusieurs groupes de plusieurs barreaux (2, 2', 2") sont arrangés symétriquement dans l'élément de mesure.

11. Élément de mesure selon une des revendications 1 à 9 **caractérisé en ce que** deux ou plusieurs des barreaux (2, 2', 2") sont arrangés en orientation opposée en ce qui concerne leur polarisations dans un bloc (25), joint l'un à l'autre et ayant des métallisations sur leur faces de contact.

12. Élément de mesure selon la revendication 11 **caractérisé en ce qu'**un ou plusieurs groupes de plusieurs blocs (25) sont arrangés symétriquement dans l'élément de mesure.

13. Élément de mesure selon l'une des revendication 10 ou 12 **caractérisé en ce qu'**un groupe des barreaux (2, 2', 2") ou un groupe des blocs (25) est agencé en une ou plusieurs rangées.

14. Élément de mesure selon l'une des revendication 10 ou 12 **caractérisé en ce qu'**un groupe des barreaux (2, 2', 2'') ou un groupe des blocs (25) est agencé en forme de cercle.

15. Senseur (12) comprenant un boîtier de senseur (13) ayant un intérieur (14), un élément de mesure (1) selon l'une des revendications précédentes monté dans l'intérieur (14) ainsi qu'une membrane (16) avec une surface de transmission de force (17) voisine de l'élément des mesure (1).

16. Senseur selon la revendication 15 **caractérisé en ce que** l'élément de mesure (1) est monté dans la région du couvercle (9) à une extrémité (18a) d'une douille anti-contrainte (18) alors que l'autre extrémité (18b) de la douille anti-contrainte est accrochée au boîtier de senseur (13) dans la région de la membrane (16).
